(19) Europäisches Patentamt
European Patent Office
Office européen des brevets

(11) EP 0 772 538 B1

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(21) Anmeldenummer: 95925841.9

(22) Anmeldetag: **06.07.1995**

(51) Int. Cl.⁶: **B60T 8/00**

(86) Internationale Anmeldenummer:
**PCT/EP95/02630**

(87) Internationale Veröffentlichungsnummer:
**WO 96/04158 (15.02.1996 Gazette 1996/08)**

(54) **VERFAHREN ZUR ERMITTLUNG VON KORREKTURFAKTOREN FÜR RADGESCHWINDIGKEITSSIGNALE**

PROCESS FOR DETERMINING WHEEL SPEED SIGNAL CORRECTION FACTORS

PROCEDE DE DETERMINATION DE FACTEURS DE CORRECTION POUR DES SIGNAUX DE MESURE DE LA VITESSE DES ROUES

(84) Benannte Vertragsstaaten:
**DE FR GB**

(30) Priorität: **29.07.1994 DE 4426960**

(43) Veröffentlichungstag der Anmeldung:
**14.05.1997 Patentblatt 1997/20**

(73) Patentinhaber:
**ITT Automotive Europe GmbH
60488 Frankfurt (DE)**

(72) Erfinder:
- **BURKHARD, Dieter
  D-67714 Waldfischbach-Burgalben (DE)**
- **DORNSEIFF, Manfred
  D-59969 Bromskirchen (DE)**
- **SCHMIDT, Robert
  D-56477 Rennerod (DE)**
- **SCHWARTZ, Jean-Claude
  D-60594 Frankfurt am Main (DE)**

(56) Entgegenhaltungen:
EP-A- 0 293 561          EP-A- 0 387 384
EP-A- 0 508 146          EP-A- 0 510 466
DE-A- 4 016 903          DE-A- 4 230 481

**Beschreibung**

Die Erfindung bezieht sich auf ein Verfahren zur Ermittlung von Korrekturfaktoren, mit denen bei der Auswertung von Radgeschwindigkeitssignalen, die Eingangssignale für Kfz-Regelungssysteme sind, die Unterschiede der Reifenabrollumfänge erfaßt werden, bei dem, solange keine Regelung stattfindet, die Radgeschwindigkeiten gemessen werden, eine Bezugsgeschwindigkeit ermittelt wird und bei dem zur Bildung der Korrekturfaktoren die Radgeschwindigkeit mit der Bezugsgeschwindigkeit verglichen wird.

Aus der internationalen Anmeldung WO 89/04783 ist bereits ein derartiges Verfahren bekannt, bei dem in Zeiträumen ohne Radschlupf die Fahrzeuggeschwindigkeit ermittelt wird, aus den Abweichungen der Räder von dieser Fahrzeuggeschwindigkeit Korrekturwerte ermittelt werden und bei dem nachfolgend die Radgeschwindigkeit der einzelnen Fahrzeugräder mit diesen Korrekturwerten korrigiert werden.

Nach diesem bekannten Verfahren werden alle Räder untereinander paarweise verglichen. Es wird das Radpaar mit der geringsten Geschwindigkeitsdifferenz ermittelt und die mittlere Geschwindigkeit dieses Radpaares als Fahrzeuggeschwindigkeit ausgewertet. Sodann wird ein Mittelwert von aufeinanderfolgenden Messungen gebildet. Die Geschwindigkeit der einzelnen Räder wird dann zu diesem Mittelwert in Beziehung gesetzt, um den jeweiligen Korrekturfaktor zu ermitteln.

Es bereitet Schwierigkeiten, auf diese Weise die z.B. für ein Antiblockiersystem (ABS) oder für eine Antriebsschlupfregelung (ASR) erforderliche Genauigkeit zu erreichen und gleichzeitig fälschliche, irreführende Korrekturwerte infolge von Kurvenfahrten oder dergl. auszuschließen.

Aus der DE 39 15 879 A1 ist ein Verfahren bekannt, bei dem aus den Geschwindigkeitssignalen der einzelnen Räder eine Basisgeschwindigkeit abgeleitet wird und für jedes Rad nach einem vorgegebenen Algorithmus ein Radfaktor bzw. Korrekturfaktor gebildet wird, der multipliziert mit der tatsächlichen Radgeschwindigkeit die Basisgeschwindigkeit ergibt. Die Radgeschwindigkeit multipliziert mit dem auf diese Weise ermittelten Korrekturfaktor wird dann anstelle der tatsächlichen Radgeschwindigkeit der weiteren Signalverarbeitung zugrunde gelegt. Das Verfahren dient zur Auswertung der Radgeschwindigkeitssignale einer Bremsanlage mit Blockierschutz- oder Antriebsschlupfregelung.

Ferner ist aus der DE 40 36 742 A1 eine Schaltungsanordnung für ein Antriebsschlupfregelungssystem mit Bremsen- oder Motoreingriff bekannt, die zur Verbesserung der Regelfunktion bei Montage eines kleineren Ersatzrades anstelle eines angetriebenen Normalrades dient. Mit dieser Schaltungsanordnung wird die an dem Ersatzrad gemessene Drehgeschwindigkeit durch einen bei stabilem Raddrehverhalten ermittelten Korrekturfaktor bewertet und dadurch dem Geschwindigkeitsmeßwert des zweiten angetriebenen Rades derselben Achse derart angepaßt, daß für das (kleinere) Ersatzrad die gleiche Schlupf-Regelschwelle wie für ein Normalrad gilt. Auch hierbei wird der Korrekturfaktor bei normaler Fahrt und nichtaktivierter Antriebsschlupfregelung ermittelt.

Der vorliegenden Erfindung liegt nun die Aufgabe zugrunde, ein Verfahren zu entwickeln, das sich durch besonders hohe Genauigkeit des Abgleichs der unterschiedlichen Reifenabrollumfänge auszeichnet. Die Genauigkeit sollte so hoch sein, daß auf Basis der Radgeschwindigkeitssignale sogar eine elektronische Regelung der Bremskraftverteilung (EBV) möglich wird; im Vergleich zu einem Antiblockiersystem (ABS) ist nämlich für ein EBV ein wesentlich genauerer Abgleich, nämlich ein etwa zehnfach genauerer Abgleich, der Reifenabrollumfänge erforderlich.

Es hat sich gezeigt, daß diese Aufgabe durch eine Weiterentwicklung eines Verfahrens der eingangs genannten Art gelöst werden kann, die darin besteht

- daß die Abweichung des Kurzzeit- von dem Langzeit-Korrekturfaktor mit Hilfe eines Bandpasses, der unterhalb einer unteren und oberhalb einer oberen Geschwindigkeitsschwelle das die Abweichung darstellende Signal schwächt, gewichtet wird,
- daß mit Hilfe eines Tiefpasses ein Langzeit-Mittelwert der gewichteten Abweichung gebildet wird und
- daß in Abhängigkeit von dem Fahrzustand ein Teilwert dieses Langzeit-Mittelwerts zur Korrektur bzw. Anpassung des Langzeit-Korrekturfaktors ausgewertet wird.

Durch die erfindungsgemäße, hochgenaue Korrektur der Radgeschwindigkeiten wird eine Verbesserung der ABS-, ASR- oder EBV-Regelung erreicht. Es werden sowohl die Änderungen der Radgeschwindigkeitssignale infolge der Montage eines Notrades, als Folge einer Kurvenfahrt, durch Einfluß des Motorschleppmomentes, durch Luftdruckverluste oder durch sogen. Schlechtweg-Fahrbahnen ausgeglichen. Die erreichte Genauigkeit reicht für eine EBV-Regelung. Es wird auch eine Querbeschleunigungsberechnung möglich.

Nach einem vorteilhaften Ausführungsbeispiel der Erfindung dient die momentan niedrigste Radgeschwindigkeit als Bezugsgeschwindigkeit, wobei der Kurzeit-Korrekturfaktor des jeweiligen Rades durch Division der Bezugsgeschwindigkeit durch die Radgeschwindigkeit und Mittelwertbildung bzw. Filterung des Quotienten $v_{min}/v_{Rn}$ ermittelt wird. Zur Mittelwertbildung wird zweckmäßigerweise ein digitales Filter bzw. ein Tiefpaß verwendet, der den Kurzzeit-Korrekturfaktor nach der Beziehung

$$KZ_{Rn} = \frac{1}{N} \sum_{i=1}^{N} \frac{C \times V_{min\,i}}{V_{Rn\,i}}$$

bildet, wobei bedeuten:

$KZ_{Rn}$ = Mittelwert des Kurzzeit-Korrekturfaktor des Rades n (n = 1 bis 4)

N = Anzahl der Loops bzw. Zyklen, über die der Mittelwert gebildet wird

$v_{min}$ = momentan niedrigste Radgeschwindigkeit

$v_{Rn}$ = momentane Geschwindigkeit des Rades n

C = Konstante, z.B. C = 1000.

Bei einer Loop-Zeit in der Größenordnung zwischen 5 und 20 ms wird der Mittelwert nach einem vorteilhaften Ausführungsbeispiel über eine Zeitspanne von der Größenordnung zwischen 50 und 200 ms gebildet.

Ferner ist es erfindungsgemäß vorgesehen, die Langzeit-Mittelwerte der gewichteten Abweichungen nach der Beziehung

$$LM_{Rn} = \frac{1}{M} \sum_{i=N}^{M \cdot N} f\,(D'_{Rn})_i$$

zu bilden, mit

$LM_{RN}$ = Langzeit-Mittelwert des Rades n

= Mittelwert der gewichteten Abweichung ($D'_{Rn}$) des Kurzzeit- von dem Langzeitkorrekturfaktor des Rades n

M = Anzahl der Summierintervalle N.

Ferner besteht ein Ausführungsbeispiel des erfindungsgemäßen Verfahrens darin, daß die Teilwerte dieser Langzeit-Mittelwerte durch Kurvengewichtungsfaktoren bestimmt werden, die durch diagonalen, seitenweisen und achsweisen Vergleich der Langzeit-Mittelwerte der einzelnen Räder zu ermitteln sind.

Schließlich ist es auch vorgesehen, in Abhängigkeit von den Teilwerten und je nach Höhe der Teilwerte die Langzeit-Korrekturfaktoren zu variieren.

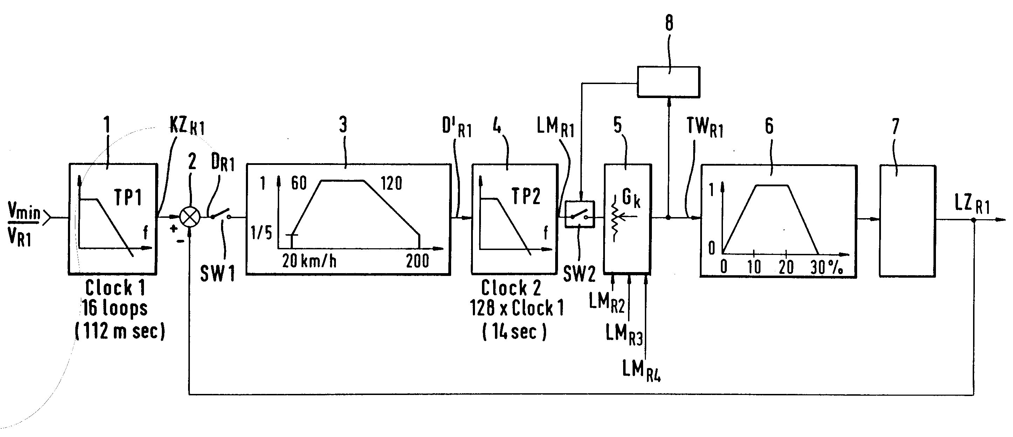

Weitere Merkmale, Vorteile und Anwendungsmöglichkeiten der Erfindung gehen aus der Schilderung eines Ausführungsbeispiels anhand der beigefügten Abbildung hervor, die in symbolischer Blockdarstellung den Ablauf des erfindungsgemäßen Verfahrens, die einzelnen Schritte und Funktionen veranschaulicht.

Nach dieser Blockdarstellung wird für jedes Rad als Eingangsgröße ein aus der momentan niedrigsten Geschwindigkeit $v_{min}$ und der jeweiligen Radgeschwindigkeit $v_{Rn}$ bzw. $v_{R1}$, wenn es sich um das Rad Nr. 1 handelt, gebildeter Quotient $v_{min}/v_{R1}$ verwendet.

Mit Hilfe eines Tiefpasses 1 wird aus der Eingangsgröße $v_{min}/v_{R1}$ ein Kurzzeit-Korrekturfaktor $KZ_{R1}$ gebildet. Es handelt sich im vorliegenden Fall um ein digitales Filter bzw. einen digitalen Tiefpaß 1 (TP1), der in diesem Beispiel über jeweils 16 loops bei einer Taktfrequenz von 7 ms, also über 112 ms, einen Mittelwert des Eingangssignals $v_{min}/v_{R1}$ berechnet. Das Ausgangssignal des Tiefpasses 1, nämlich der Kurzzeit-Korrekturfaktor $KZ_{R1}$, wird nach der Beziehung

$$KZ_{Rn} = \frac{1}{N} \sum_{i=1}^{N} \frac{C \times V_{min\,i}}{V_{Rn\,i}}$$

gebildet. Bei einer Mittelwertbildung über N = 16 loops und einer von der Signalauflösung abhängigen Konstanten C = 1000 ergibt sich für das Rad 1 ein Kurzzeit-Faktor

$$KZ_{R1} = \frac{1}{16} \sum_{i=1}^{16} \frac{1000 \cdot V_{min\,i}}{V_{R1\,i}}$$

Der Kurzzeit-Korrekturfaktor ist also in diesem Fall stets < 1000, die Signalauflösung liegt bei 0,1 %.

In einem Vergleicher und Differenzbildner 2 werden anschließend der Kurzzzeit-Korrekturfaktor $KZ_{R1}$ und der Langzeit-Korrekturfaktor $LZ_{R1}$ des jeweiligen Rades n = 1 miteinander verglichen und die Differenz bzw. die Abweichung $D_{R1}$ des Kurzzeit- von dem Langzeit-Korrekturfaktor dieses Rades ermittelt. Dieses die Abweichung $D_{Rn}$ bzw. $D_{R1}$ darstellende Signal wird mit Hilfe eines Bandpasses 3 bewertet bzw. in Abhängigkeit von der Fahrzeuggeschwindigkeit gewichtet. Der Bandpaß 3 läßt in einem mittleren Geschwindigkeitsbereich, der hier zwischen 60 km/h und 120 km/h liegt, das die Abweichung darstellende Signal $D_{R1}$ in voller Höhe passieren, während unterhalb einer unteren Geschwindigkeitsschwelle, die im vorliegenden Beispiel bei 20 km/h liegt und oberhalb einer oberen Geschwindigkeitsschwelle von 200 km/h eine sehr hohe Dämpfung gegeben ist. Im dargestellten Beispiel nimmt die Signaldämpfung im Bereich zwischen 20 km/h und 60 km/h linear ab und im Bereich zwischen 120 km/h und 200 km/h linear zu. Natürlich sind in Abhängigkeit von dem jeweiligen Fahrzeug auch andere Bandpaß-Charakteristiken sinnvoll.

Die gewichtete Abweichung $D'_{Rn}$ bzw. $D'_{R1}$ wird in einem zweiten digitalen Tiefpaß 4 (TP2) weiterverarbeitet. Es wird ein Langzeit-Mittelwert ($LM_{Rn}$ bzw. $LM_{R1}$) nach der Beziehung

$$LM_{Rn} = \frac{1}{M} \sum_{i=1}^{M} f(D'_{Rn})_i$$

gebildet.

Im vorliegenden Beispiel wird in Intervallen von ca. 14 Sekunden, nämlich 128 x 16 loops, d.h. 128 x 16 x 7 ms, ein Langzeit-Mittelwert $LM_{Rn}$ gebildet.

Im unteren Geschwindigkeitsbereich werden auf diese Weise die Stadtverkehrs-Einflußgrößen, wie Beschleunigungsmanöver, enge Kurven usw. weggefiltert. Im oberen Geschwindigkeitsbereich werden die Einflüsse der hohen Antriebs- und Motorschleppmomente auf die Korrekturfaktoren reduziert.

Nach dem erfindungsgemäßen Verfahren wird jedoch nur ein Teilwert $TW_{Rn}$ bzw. $TW_{R1}$ des Langzeit-Mittelwertes $LM_{Rn}$ bzw. $LM_{R1}$ weitergeleitet und weiterverarbeitet. Diese Teilwerte werden in Abhängigkeit von Kurvengewichtungsfaktoren Gk ermittelt, die wiederum durch diagonalen, seitenweisen und achsweisen Vergleich der Langzeit-Mittelwerte der einzelnen Räder gewonnen werden. In den vorgegebenen Perioden, nämlich alle 14 Sekunden, werden die Langzeit-Mittelwerte $LM_{Rn}$ untereinander verglichen und ein entsprechender Kurvengewichtungsfaktor Gk berechnet, und zwar auf folgende Weise:

a) diagonaler Vergleich:

$$|LM_{R1} + LM_{R3} - LM_{R2} - LM_{R4}| > = 20 \ (= 2\%)$$

In diesem Fall wird Gk = 1 angenommen.

b) Ist die Bedingung a) nicht erfüllt, besteht der Verdacht auf Kreisfahrt oder Kurvenfahrt. Die Langzeit-Mittelwerte der einzelnen Räder werden seitenweise verglichen und die Kurvengewichtungsfaktoren in diesem Fall nach folgendem Schema festgelegt:

$$|LM_{R1} + LM_{R4} - LM_{R2} - LM_{R3}| > 10 \ (= 1\%) \ Gk = 2$$

$$|LM_{R1} + LM_{R4} - LM_{R2} - LM_{R3}| > 20 \ (= 2\%) \ Gk = 3$$

$$|LM_{R1} + LM_{R4} - LM_{R2} - LM_{R3}| > 30 \ (= 3\%) \ Gk = 4$$

$$|LM_{R1} + LM_{R4} - LM_{R2} - LM_{R3}| > 40 \ (= 4\%) \ Gk = 5$$

usw. Der Index "1" weist hier auf das linke Vorderrad, der Index "2" auf das rechte Vorderrad hin. Mit "3" und "4" sind das rechte bzw. das linke Hinterrad beziffert.

c) Durch achsweisen Vergleich der Langzeit-Mittelwerte läßt sich ein Motorschleppmoment-Einfluß erkennen. Hierzu werden die Langzeit-Mittelwerte achsweise miteinander verglichen:

$$|LM_{R1} + LM_{R2} - LM_{R3} - LM_{R4}| > 10 \ (= 1\%) \ Gk \ 2$$

In diesem Falle wird der Kurvengewichtungsfaktor GK mit 2 multipliziert.

In einem anschließenden Bandpaß 6 wird dann radindividuell die Übernahme des Ausgangssignals der Dämpfungsschaltung 5 auf den Langzeit-Korrekturfaktor $LZ_{Rn}$ bzw. $LZ_{R1}$ begrenzt. Um die Auswirkung eines Überdrehens des Rades auf den Langzeit-Korrekturfaktor abzuschwächen, wird der Teilwert $TW_{R1} = LM_{R1}/Gk$, wenn diese Größe zwischen 0 und 10% liegt, vollständig übernommen, wenn sie zwischen 10 und 20% liegt, auf 10% begrenzt und, wenn sie zwischen 20 und 30% liegt, zu 10% bis 0% übernommen. Dieser Kurvenverlauf, der die Übernahme wiedergibt, ist in dem Bandpaß-Block 6 symbolisch angedeutet.

Das Ausgangssignal des Bandpasses 6 wird in einer Anpassungsschaltung 7 zur Korrektur des Langzeit-Korrekturfaktors $LZ_{Rn}$ bzw. $LZ_{R1}$ ausgewertet, der schließlich von dem Ausgang der Schaltung 7 zu der Vergleichs- und Differenzbildungsstufe 2 zurückgeführt wird.

Der Langzeit-Korrekturfaktor wird für jedes Rad n in der vorstehenden, für das Rad 1 (n = 1) geltenden Funktionsweise gebildet.

Schließlich sind in der Abbildung noch zwei Schalter symbolisch angedeutet. SW1 ist offen, wenn eine Störung in den Eingangssignalen festgestellt wird.

SW2 ist offen, wenn der Langzeit-Korrekturfaktor des entsprechenden Rades als "zutreffend" erkannt wird und vorübergehend nicht korrigiert werden soll. Sobald der gefilterte, gemittelte und gewichtete Kurzzeit-Korrekturfaktor, nämlich dessen Teilwert $TW_{Rn}$, hier $TW_{R1}$, einen Schwellwert überschreitet, wird der Schalter SW2 wieder geschlossen. Um dies zu erreichen, wird im vorliegenden Ausführungsbeispiel der Erfindung mit Hilfe eines Zählers 8 im Arbeitstakt des Tiefpasses 4 (TP2), d.h. hier im 14-Sekunden-Takt, der Teilwert $TW_{R1}$ erfaßt. Die Ausgangssignale werden gezählt. Solange keine Korrektur angebracht ist, beträgt der Wert des Ausgangssignals der Stufe 5 "0" oder "1". Diese Werte werden im Zähler 8 addiert. Treten höhere Teilwerte $TW_{R1}$ auf, werden diese vom Inhalt des Zählers 8 abgezogen. Sobald der Zählerinhalt einen vorgegebenen Wert unterschreitet, wird der Schalter SW2 geschlossen. Auf diese Weise wird sehr schnell in der Anfangsphase die gewünschte Korrektur herbeigeführt.

## Patentansprüche

1. Verfahren zur Ermittlung von Korrekturfaktoren, mit denen bei der Auswertung von Radgeschwindigkeitssignalen, die Eingangssignale für Kfz-Regelungssysteme sind, die Unterschiede der Reifenabrollumfänge erfaßt werden, bei dem, solange keine Regelung stattfindet, die Radgeschwindigkeiten gemessen werden, eine Bezugsgeschwindigkeit ermittelt wird und bei dem zur Bildung der Korrekturfaktoren die Radgeschwindigkeit mit der Bezugsgeschwindigkeit verglichen wird, wobei

für jedes Rad (n; n = 1 bis 4) ein Kurzzeit-Korrekturfaktor ($KZ_{Rn}$) und ein Langzeit-Korrekturfaktor ($LZ_{Rn}$) gebildet werden, und
die Abweichung ($D_{Rn}$) des Kurzzeit- von dem Langzeit-Korrekturfaktor ermittelt wird, dadurch gekennzeichnet,

- daß diese Abweichung ($D_{Rn}$) mit Hilfe eines Bandpasses (3), der unterhalb einer unteren und oberhalb einer oberen Geschwindigkeitsschwelle das die Abweichung ($D_{Rn}$) darstellende Signal schwächt, gewichtet wird,
- daß mit Hilfe eines Tiefpasses (4) ein Langzeit-Mittelwert ($LM_{Rn}$) der gewichteten Abweichung ($D_{Rn}$) gebildet wird und
- daß in Abhängigkeit von dem Fahrzustand ein Teilwert ($TW_{Rn}$) dieses Langzeit-Mittelwerts ($LM_{Rn}$) zur Korrektur bzw. Anpassung des Langzeit-Korrekturfaktors ($LZ_{Rn}$) ausgewertet wird.

2. Verfahren nach Anspruch 1, dadurch **gekennzeichnet**, daß die momentan niedrigste Radgeschwindigkeit ($v_{min}$) als Bezugsgeschwindigkeit dient und daß der Kurzzeit-Korrekturfaktor ($KZ_{Rn}$) des jeweiligen Rades (n) durch Division der Bezugsgeschwindigkeit ($v_{min}$) durch die Radgeschwindigkeit ($v_{Rn}$) und Mittelwertbildung bzw. Filterung des Quotienten ($V_{min}/V_{Rn}$) ermittelt wird.

3. Verfahren nach Anspruch 2, dadurch **gekennzeichnet**, daß zur Mittelwertbildung ein digitales Filter bzw. ein Tiefpaß verwendet wird, der den Kurzzeit-Korrekturfaktor ($KZ_{Rn}$) nach der Beziehung bildet, wobei bedeuten:

$$KZ_{Rn} = \frac{1}{N} \sum_{i=1}^{N} \frac{C \times V_{min\,i}}{V_{Rn\,i}}$$

$KZ_{Rn}$ = Kurzzeit-Korrekturfaktor des Rades n (n = 1 bis 4)

N = Anzahl der Loops bzw. Zyklen, über die der Mittelwert gebildet wird

$v_{min}$ = momentan niedrigste Radgeschwindigkeit

$v_{Rn}$ = momentane Geschwindigkeit des Rades n

C = Konstante, z.B. C = 1000.

4. Verfahren nach Anspruch 3, dadurch **gekennzeichnet**, daß bei einer Loop-Zeit in der Größenordnung zwischen und 5 und 20 ms der Mittelwert über eine Zeitspanne von der Größenordnung zwischen 50 und 200 ms gebildet wird.

5. Verfahren nach einem oder mehreren der Ansprüche 1 bis 4, dadurch **gekennzeichnet**, daß die Langzeit-Mittelwerte ($LM_{Rn}$) der gewichteten Abweichungen ($D'_{Rn}$) nach der Beziehung

$$LM_{Rn} = \frac{1}{M} \sum_{i=N}^{M \cdot N} f(D'_{Rn})_i$$

gebildet werden, mit

$LM_{RN}$ = Langzeit-Mittelwert des Rades n
= Mittelwert der gewichteten Abweichung ($D'_{Rn}$) des Kurzzeit von dem Langzeitkorrekturfaktor des Rades n

M Anzahl der Summierintervalle N.

6. Verfahren nach einem oder mehreren der Ansprüche 1 bis 5, dadurch **gekennzeichnet**, daß die Teilwerte ($TW_{Rn}$) durch Kurvengewichtungsfaktoren (Gk) bestimmt werden, die durch diagonalen, seitenweisen und achsweisen Vergleich der Langzeit-Mittelwerte ($LM_{Rn}$) der einzelnen Räder ermittelt werden.

7. Verfahren nach einem der Ansprüche 1 bis 6, dadurch **gekennzeichnet**, daß in Abhängigkeit von den Teilwerten ($TW_{Rn}$) und je nach Höhe der Teilwerte die Langzeit-Korrekturfaktoren ($LZ_{Rn}$) variiert werden.

**Claims**

1. Method of determining correction factors by which the differences of the tire-tread cirumferences are ascertained in the evaluation of wheel speed signals, which are input signals for automotive vehicle control systems, wherein, in the absence of control operations, the wheel speeds are measured, a reference speed is determined, and the wheel speed is compared to the reference speed for producing the correction factors, wherein a short-time correction factor ($KZ_{Rn}$) and a long-time correction factor ($LZ_{Rn}$) is developed for each wheel (n; n = 1 to 4), and the deviation ($D_{Rn}$) of the short-time correction factor from the long-time correction factor is determined,
**characterized** in that

- this deviation ($D_{Rn}$) is weighted by way of a band-pass filter (3) which weakens the signal representative of the deviation ($D_{Rn}$) below a bottom speed threshold and above a top speed threshold,
- a long-time average value ($LM_{Rn}$) of the weighted deviation ($D_{Rn}$) is produced by way of a low-pass filter (4), and
- a partial value ($TW_{Rn}$) of the long-time average value ($LM_{Rn}$) is assessed, as a function of the driving condition, for the correction or adaption of the long-time correction factor ($LZ_{Rn}$).

2. Method as claimed in claim 1,
**characterized** in that the instantaneously lowest wheel speed ($v_{min}$) is taken as the reference speed, and in that the short-time correction factor ($KZ_{Rn}$) of the respective wheel (n) is developed by division of the reference speed ($v_{min}$) by the wheel speed ($v_{Rn}$) and by producing the average value or filtering the quotient ($V_{min}/V_{Rn}$).

3. Method as claimed in claim 2,
**characterized** in that, for producing the average value, a digital filter or a low-pass filter is used which develops the short-time correction factor ($KZ_{Rn}$) according to the relation

6

$$KZ_{Rn} = \frac{1}{N} \sum_{i=1}^{N} \frac{C \times V_{min\,i}}{V_{Rn\,i}}$$

and, in the relation,

$KZ_{Rn}$  is the short-time correction factor of the wheel n (n = 1 to 4),
N  is the number of loops or cycles, by way of which the average value is produced,
$v_{min}$  is the instantaneously lowest wheel speed,
$v_{Rn}$  is the instantaneous speed of the wheel n,
C  is a constant, for example, C = 1000.

4. Method as claimed in claim 3,
**characterized** in that with a loop time in the order of 5 to 20 msecs, the average value is developed over a period of time in the order of 50 to 200 msecs.

5. Method as claimed in any one or more of claims 1 to 4,
**characterized** in that the long-time average values ($LM_{Rn}$) of the weighted deviations ($D'_{Rn}$) are produced according to the relation

$$LM_{Rn} = \frac{1}{M} \sum_{i=N}^{M \cdot N} f\,(D'_{Rn})_i$$

and, in the relation,

$LM_{RN}$  is the long-time average value of the wheel n, is the average value of the weighted deviation ($D'_{Rn}$) of the short-time correction factor from the long-time correction factor of the wheel n,
M  is the number of the summing intervals N.

6. Method as claimed in any one or more of claims 1 to 5,
**characterized** in that the partial values ($TW_{Rn}$) are determined by curve-weighting factors (Gk) which are determined by a diagonal, sidewise and axlewise comparison of the long-time average values ($LM_{Rn}$) of the individual wheels.

7. Method as claimed in any one of claims 1 to 6,
**characterized** in that the long-time correction factors ($LZ_{Rn}$) are varied as a function of the partial values ($TW_{Rn}$) and depending on the magnitude of the partial values.

**Revendications**

1. Procédé de détermination de facteurs de correction au moyen desquels, lors de l'analyse de signaux de vitesse de roue qui constituent des signaux d'entrée pour des systèmes de régulation de véhicule automobile, les différences des circonférences de roulement de pneumatique sont établies, selon lequel, tant qu'aucune régulation n'a lieu, les vitesses de roue sont mesurées, une vitesse de référence est déterminée et, pour la formation des facteurs de correction, la vitesse de roue est comparée à la vitesse de référence, tandis qu'un facteur de correction à court terme ($KZ_{Rn}$) et un facteur de correction à long terme ($LZ_{Rn}$) sont formés pour chaque roue (n ; n = 1 à 4) et que l'écart ($D_{Rn}$) du facteur de correction à court terme par rapport au facteur de correction à long terme est déterminé, caractérisé

- en ce que cet écart ($D_{Rn}$) est pondéré au moyen d'un passe-bande (3) qui, au-dessous d'un seuil inférieur de vitesse et au-dessus d'un seuil supérieur de vitesse, atténue le signal représentant l'écart ($D_{Rn}$),
- en ce qu'une valeur moyenne à long terme ($LM_{Rn}$) de l'écart pondéré ($D_{Rn}$) est formée au moyen d'un passe-bas (4) et
- en ce qu'en fonction des conditions de conduite, une valeur partielle ($TW_{Rn}$) de cette valeur moyenne à long terme ($LM_{Rn}$) est exploitée pour corriger ou adapter le facteur de correction à long terme ($LZ_{Rn}$).

2.  Procédé suivant la revendication 1, caractérisé en ce que la vitesse de roue momentanément la plus faible ($v_{min}$) sert de vitesse de référence et en ce que le facteur de correction à court terme ($KZ_{Rn}$) de chaque roue (n) est déterminé par division de la vitesse de référence ($v_{min}$) par la vitesse de roue ($v_{Rn}$) et formation de valeur moyenne ou filtrage du quotient ($v_{min}/v_{Rn}$).

3.  Procédé suivant la revendication 2, caractérisé en ce que la formation de la valeur moyenne utilise un filtre numérique ou un passe-bas qui forme le facteur de correction à court terme ($KZ_{Rn}$) suivant la relation :

$$KZ_{Rn} = (1/N) \sum_{i=1}^{N} (C \times v_{min\,i})/v_{Rn\,i}$$

avec les significations suivantes :

$KZ_{Rn}$ = facteur de correction à court terme de la roue n (n = 1 à 4)
N = nombre des boucles ou cycles sur l'étendue duquel la valeur moyenne est formée
$v_{min}$ = vitesse de roue momentanément la plus faible
$v_{Rn}$ = vitesse momentanée de la roue n
C = constante, par exemple C = 1000.

4.  Procédé suivant la revendication 3, caractérisé en ce que, pour une durée de boucle de l'ordre de 5 à 20 ms, la valeur moyenne est formée sur l'étendue d'un intervalle de temps de l'ordre de 50 à 200 ms.

5.  Procédé suivant une ou plusieurs des revendications 1 à 4, caractérisé en ce que la valeur moyenne à long terme ($LM_{Rn}$) des écarts pondérés ($D'_{Rn}$) est formée selon la relation :

$$LM_{Rn} = (1/M) \sum_{i=N}^{M.N} f(D'_{Rn})_i$$

avec :

$LM_{Rn}$ = valeur moyenne à long terme de la roue n
    = valeur moyenne de l'écart pondéré ($D'_{Rn}$) du facteur de correction à court terme par rapport au facteur de correction à long terme de la roue n
M = nombre des intervalles de sommation N.

6.  Procédé suivant une ou plusieurs des revendications 1 à 5, caractérisé en ce que les valeurs partielles ($TW_{Rn}$) sont déterminées au moyen de facteurs de pondération de virage (Gk) qui sont établis au moyen d'une comparaison par diagonale, côté par côté et essieu par essieu des valeurs moyennes à long terme ($LM_{Rn}$) des roues individuelles.

7.  Procédé suivant l'une des revendications 1 à 6, caractérisé en ce que les facteurs de correction à long terme ($LZ_{Rn}$) font l'objet d'une variation en fonction des valeurs partielles ($TW_{Rn}$) et en tenant compte pour chacun du niveau des valeurs partielles.